Europäisches Patentamt

(19) European Patent Office

Office européen des brevets

(11) **EP 0 721 099 A2**

(12) **EUROPEAN PATENT APPLICATION**

(43) Date of publication:
10.07.1996 Bulletin 1996/28

(51) Int. Cl.⁶: **G01L 1/22**

(21) Application number: **95119920.7**

(22) Date of filing: **18.12.1995**

(84) Designated Contracting States:
**DE FR GB**

(30) Priority: **03.01.1995 US 367639**

(71) Applicant: **MOTOROLA, INC.**
**Schaumburg, IL 60196 (US)**

(72) Inventors:
• **Baum, Jeffrey I.**
**Scottsdale, Arizona 85251 (US)**
• **Marvin, Jeffrey D.**
**Phoenix, Arizona 85044 (US)**

• **Liu, Sin Wa L.**
**Scottsdale, Arizona 85253 (US)**
• **Jacobsen, Eric S.**
**Scottsdale, Arizona 85251 (US)**

(74) Representative: **Spaulding, Sarah Jane et al**
**Motorola**
**European Intellectual Property**
**Midpoint**
**Alencon Link**
**Basingstoke, Hampshire RG21 1PL (GB)**

(54) **Sensor circuit and method for compensation**

(57) A sensor circuit (20) and method for calibrating and temperature compensating the offset and span of the sensor circuit (20). The sensor circuit (20) includes a transducer (21) coupled to a microprocessor (22) via an amplifier (23) and a temperature sensing circuit (24). An output port of the microprocessor (22) is coupled to a first input node of the amplifier (23) via a transducer offset compensation network (33) and to a second input node of the amplifier (23) via a transducer span compensation network (34), thereby forming a closed-loop feedback network. In operation, a transducer output signal is transmitted to the microprocessor (22) via the amplifier (23). The microprocessor (22) generates a transducer compensation signal which is fed back to the input nodes of the amplifier (23) via the transducer offset (33) and span (34) compensation networks to generate a calibrated and temperature compensated transducer output signal ($S_{CA}$).

*FIG. 2*

## Description

Background of the Invention

The present invention relates, in general, to sensors and, more particularly, to calibrated and temperature compensated sensors.

Sensors are widely used in applications such as automotive, household appliances, building ventilation, and in general industrial applications to sense a physical condition such as pressure, temperature, or acceleration, and to provide an electrical signal representative of the sensed physical condition. A conventional sensor is constructed as a network of resistors in a resistive bridge configuration, wherein the resistive bridge has two terminals for coupling to power supply potentials and two terminals for providing a differential output signal. In pressure sensor applications, the bridge resistors are formed on a sensing diaphragm by implanting or diffusing impurity materials into a semiconductor substrate. When the sensor is exposed to the physical condition, one or more of the bridge resistors changes resistance, thereby unbalancing the resistive bridge and generating a differential output signal. As those skilled in the art are aware, the electrical signal is proportional to the imbalance of the resistor network.

A drawback of resistive bridge type sensors is that they produce a nonzero output offset electrical signal at their output terminals with a null input applied. This nonzero output offset electrical signal in response to an applied null input also varies from sensor to sensor due to process and manufacturing variations. It should be noted that a sensor is at a null state when the null input of the physical condition is applied, i.e., when the pressure on one side of the sensing diaphragm is equal to the pressure on an opposing side of the sensing diaphragm. Further, the output signal of these types of pressure sensors varies over the operating pressure range at a specified supply voltage. The change in the output signal over the operating pressure range, also varies from sensor to sensor due to process and manufacturing variations. In addition, the parameters of offset and span are sensitive to temperature in these types of sensors. It should be noted that the change in the output signal of a sensor over its operating range is referred to as span. It should be further noted that definitions of terms commonly used by those skilled in the sensor art can be found in the second edition of the data book entitled "PRESSURE SENSOR DEVICE DATA" copyrighted in 1994 by Motorola, Inc.

One commonly used technique for calibrating and temperature compensating offset is to provide an offset calibration and temperature compensation network having a resistor network that is laser trimmed. Drawbacks of this technique are that laser trimming each sensor is an irreversible process that is costly and increases the amount of time for manufacturing a sensor, i.e., increases cycle time. A commonly used technique to calibrate and temperature compensate the span of the sensor is to couple the respective power supply terminals to the resistive bridge via calibration and temperature compensation resistors. However, calibration and temperature compensation resistors decrease both the sensitivity of the sensor (due to the sensor's reduced excitation voltage or voltage across the sensor element) and the signal-to-noise ratio of the sensor.

Accordingly, it would be advantageous to have a method and means to calibrate and temperature compensate the sensor's offset and span. It would be of further advantage for the sensor to be manufacturable using common sensor manufacturing techniques.

Brief Description of the Drawings

FIG. 1 is a flow chart illustrating a process for calibrating and temperature compensating offset and span in accordance with embodiments of the present invention;
FIG. 2 illustrates a schematic block diagram of a sensor circuit for use in providing offset and span calibration and temperature compensation in accordance with a first embodiment of the present invention;
FIG. 3 illustrates a detailed schematic diagram of the sensor circuit of FIG. 2;
FIG. 4 illustrates a chart which graphically shows a relationship between a temperature and an offset count of the sensor circuit of FIG. 3;
FIG. 5 illustrates a chart which graphically shows a relationship between a temperature and a span count of the sensor circuit of FIG. 3;
FIG. 6 illustrates a schematic block diagram of a sensor circuit for use in providing offset calibration and temperature compensation in accordance with a second embodiment of the present invention;
FIG. 7 illustrates a detailed schematic diagram of the sensor circuit of FIG. 6;
FIG. 8 illustrates a schematic block diagram of a sensor circuit for use in providing span calibration and temperature compensation in accordance with a third embodiment of the present invention; and
FIG. 9 illustrates a detailed schematic diagram of the sensor circuit of FIG. 8.

Detailed Description of the Drawings

Generally, the present invention provides a sensor and a closed-loop method for calibrating and temperature compensating the offset and span of the sensor. It should be understood that in accordance with the present invention, the term compensation is used to indicate transducer calibration, transducer temperature compensation, or the combination of transducer calibration and transducer temperature compensation. By way of example, the sensor is a pressure sensor that includes a transducer coupled to a microprocessor via signal conditioning circuitry. In a first embodiment of the present invention, the closed-loop compensation technique comprises transmitting an offset compensation signal and a span compensation signal from the microprocessor to the signal conditioning circuitry. In a second embodiment of the present invention, the closed-loop compensation technique comprises transmitting an offset compensation signal from the microprocessor to the signal conditioning circuitry. In a third embodiment of the present invention, the closed-loop compensation technique comprises transmitting a span compensation signal from the microprocessor to the signal conditioning circuitry. A suitable technique for generating the offset compensation signal is by means of a digital-to-analog (D/A) converter, whereas a suitable technique for generating the span compensation signal is by means of a programmable resistor array (PRA). It should be understood that the type of sensor is not a limitation of the present invention. In other words, the sensor may be a pressure sensor, a temperature sensor, an acceleration sensor, etc.

Further, it should be noted that calibration of a sensor's offset and span refers to a static-temperature condition where any sensor to sensor variations in span and offset due to process and manufacturing variations are nullified. In other words, the individual sensors are calibrated so that each sensor has the same static-temperature offset and span, i.e., a first sensor has the same static-temperature offset and span as a second sensor which in turn has the same static-temperature offset and span as a third sensor, etc. It should be further noted that temperature compensation of a sensor's offset and span refers to the situation where the variations of offset and span due to changes in temperature over a sensor's operating temperature range are nullified, i.e., a sensor is temperature compensated so that for a given constant physical condition acting upon the sensor, the offset and span of a sensor are constant over the sensor's operating temperature range.

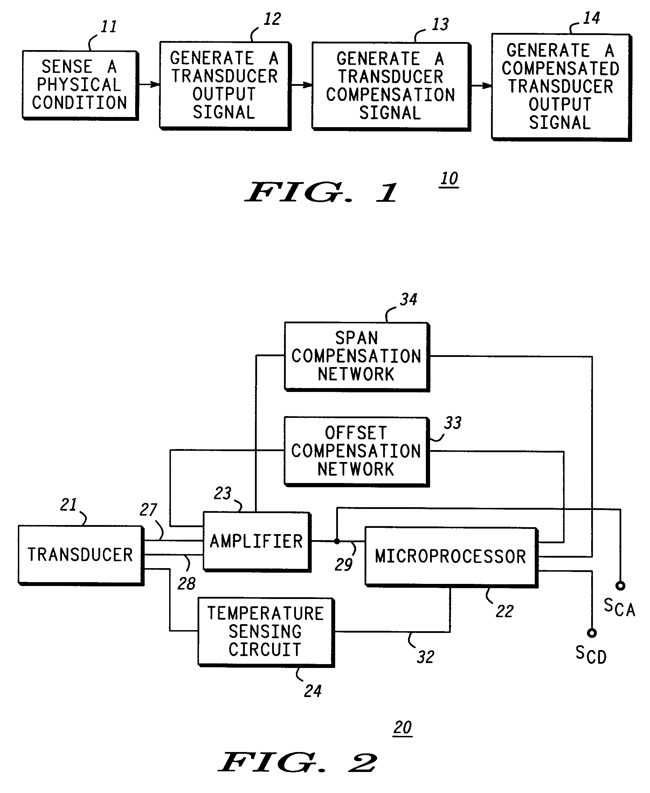

FIG. 1 shows a flow chart 10 illustrating a process for calibrating, temperature compensating, or a combination of calibrating and temperature compensating the offset and span of a sensor in accordance with the present invention. In addition, the compensation circuitry may provide level shifting of the compensated sensor output signal so that the compensated sensor output signal is within the input signal range of circuitry coupled to an output node of the sensor circuit, e.g., a microprocessor. In a beginning step (indicated by box 11 of flow chart 10), a physical condition, e.g., pressure, is sensed by a transducer (reference numeral 21 of FIGs. 2, 3, 6-9). The transducer generates a transducer output signal in response to the sensed physical condition (indicated by box 12 of flow chart 10). It should be understood that the transducer output signal is representative of the sensed physical condition.

A closed-loop transducer compensation signal is generated in response to the transducer output signal and a temperature sensing circuit output signal (indicated by box 13 of flow chart 10). In accordance with the first embodiment of the present invention, the closed-loop transducer compensation signal includes offset and span compensation components. In accordance with the second embodiment of the present invention, the closed-loop transducer compensation signal includes an offset compensation component, and in accordance with the third embodiment of the present invention the closed-loop transducer compensation signal includes a span compensation component.

A compensated transducer output signal is generated in response to the transducer output signal and the transducer compensation signal (indicated by box 14 of flow chart 10). Further the compensated transducer output signal is an analog transducer output signal that can be converted to a digital transducer output signal. It should be noted that the transducer compensation signal serves as a feedback signal and that the sensor circuit of the present invention is a closed-loop system having a closed-loop compensation network.

FIG. 2 illustrates a schematic block diagram of a sensor 20 for use in providing offset calibration and temperature compensation, span calibration and temperature compensation, as well as level shifting in accordance with the first embodiment of the present invention. Sensor 20 is also referred to as sensor circuit 20. It should be understood that sensor circuit 20 is suitable for manufacture as an integrated circuit using conventional integrated circuit processing techniques. By way of example, sensor circuit 20 is a pressure sensor comprising a transducer 21 coupled to a microprocessor unit (MPU) 22 via an amplifier 23. In particular, a first output port of transducer 21 is coupled to a first input port of amplifier 23 via an interconnect 27 and a second output port of transducer 21 is coupled to a second input port of amplifier 23 via an interconnect 28. One function of amplifier 23 is to convert a differential input signal from transducer 21 into a single-ended transducer output signal, which appears on an output port of amplifier 23. The output port of amplifier 23 is coupled to a first input port of MPU 22 via an interconnect 29. It should be noted that MPU 22 may be a microcontroller unit (MCU).

In addition, transducer 21 is coupled to MPU 22 via a temperature sensing circuit 24. By way of example, transducer 21 and temperature sensing circuit 24 are monolithically integrated into a single silicon substrate. Techniques for monolithically integrating transducer 21 and temperature sensing circuit 24 are known to those skilled in the art. An output port of temperature sensing circuit 24 is coupled to a second input port of MPU 22 via an interconnect 32.

In accordance with the first embodiment of the present invention, a closed-loop feedback network is formed by coupling a first output port of MPU 22 to a third input port of amplifier 23 via an offset calibration and temperature compensation network 33, i.e., a transducer offset compensation network 33. By way of example, transducer offset compensation network 33 is a D/A converter. In addition, another closed-loop feedback network is formed by coupling a second output port of MPU 22 to a fourth input port of amplifier 23 via a span calibration and temperature compensation network 34, i.e.,

a transducer span compensation network. By way of example, transducer span compensation network 34 is a programmable resistor array. Thus, a level shifted, offset and span calibrated, and offset and span temperature compensated output signal $S_{CA}$ appears at the output port of amplifier 23 in response to a physical condition. In addition, output signal $S_{CA}$ is converted by MPU 22 to a digital output signal $S_{CD}$ using an analog-to-digital A/D circuit (not shown) present in MPU 22. Digital output signal $S_{CD}$ appears at a third output port of MPU 22. This third output port where $S_{CD}$ appears can be a serial communications port or parallel I/O port, as those skilled in the art are aware. More particularly, MPU 22 converts the level shifted, offset and span calibrated, and offset and span compensated, analog output signal $S_{CA}$ to a level shifted, offset compensated, digital output signal $S_{CD}$ which appears at an I/O port of MPU 22.

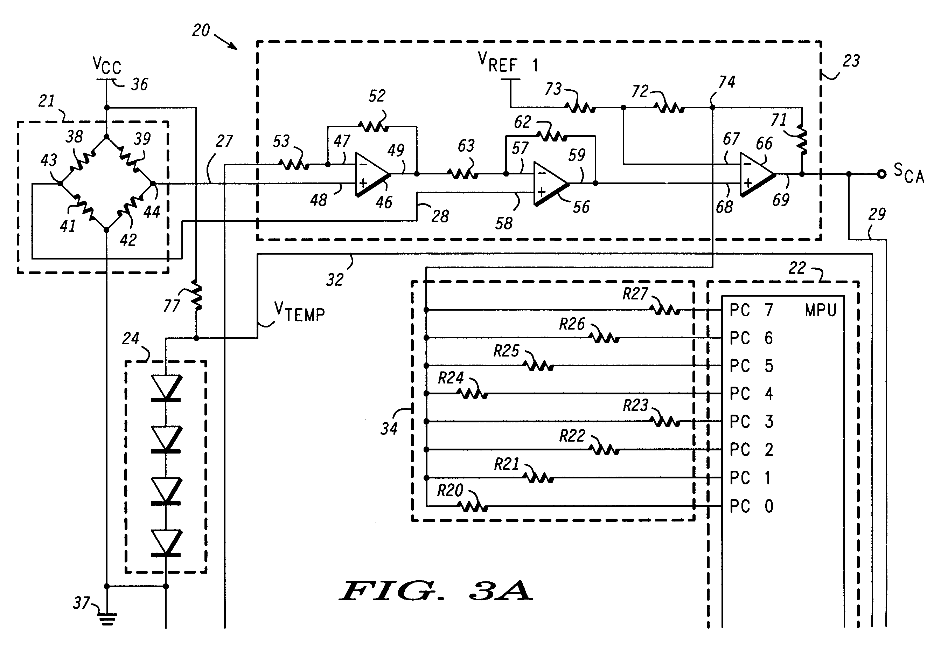

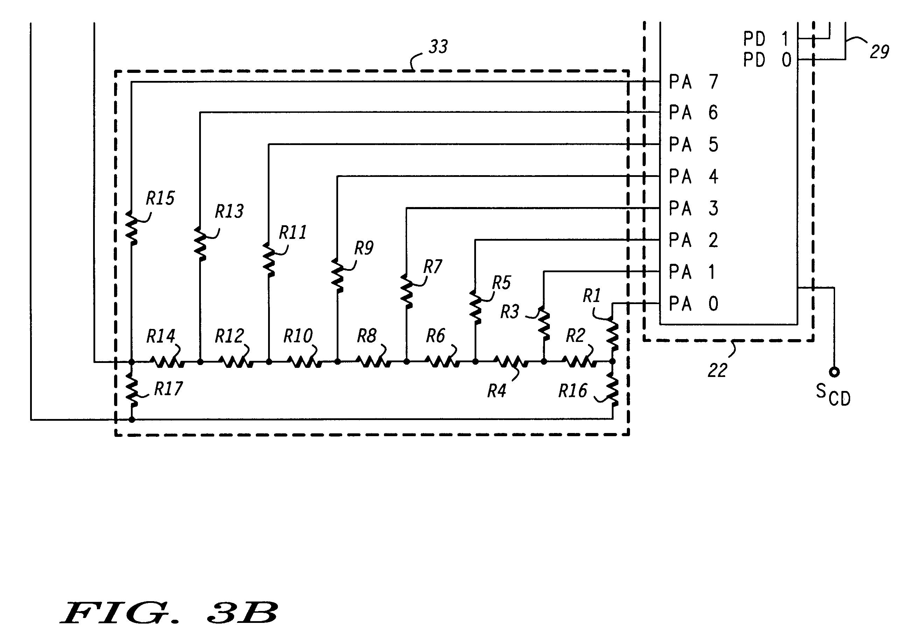

FIG. 3 illustrates a detailed schematic diagram of an embodiment of sensor circuit 20 shown in FIG. 2. It should be understood that the same reference numerals are used in the figures to denote the same elements. It should be further understood that to simplify the description of sensor circuit 20 and the operation of sensor circuit 20 all the external circuitry for supporting the operation of sensor circuit 20, including MPU 22, are not shown. The external circuitry for supporting sensor circuit 20 is well known to those skilled in the art and can be found in, for example, the second edition of the data book entitled "PRESSURE SENSOR DEVICE DATA" copyrighted in 1994 by Motorola, Inc. To indicate or denote transducer 21, MPU 22, amplifier 23, temperature sensing circuit 24, transducer offset compensation network 33, and transducer span compensation network 34 of sensor circuit 20, each element is shown in FIG. 3 as being enclosed within its own rectangular structure, wherein the boundaries of each rectangular structure are indicated by broken lines.

Referring now to transducer 21, it is coupled between a power supply conductor 36 and a power supply conductor 37. By way of example, transducer 21 is a piezo-resistive bridge network comprising silicon piezo-resistive elements 38, 39, 41, and 42. Piezo-resistive element 38 is coupled between power supply conductor 36 and a node 43. Piezo-resistive element 39 is coupled between power supply conductor 36 and a node 44. Piezo-resistive element 41 is coupled between node 43 and power supply conductor 37. Piezo-resistive element 42 is coupled between node 44 and power supply conductor 37. It should be noted that the piezo-resistive elements 38, 39, 41, and 42 are also referred to as piezo-resistors and that nodes 43 and 44 serve as transducer output nodes or ports. A suitable operating range for power supply conductor 36 is from approximately 3 volts to approximately 24 volts and a suitable operating potential for power supply conductor 37 is ground potential. Power supply conductor 36 is also referred to as $V_{CC}$.

As those skilled in the art are aware, piezo-resistive elements 38, 39, 41, and 42 become unbalanced in response to an external physical condition such as, for example, an applied pressure, temperature, acceleration, etc. In other words, the physical condition alters the properties of the semiconductor material from which transducer or piezo-resistive bridge 21 is formed, thereby increasing the resistance of one set of opposing bridge resistors, e.g., resistors 39 and 41, and decreasing the resistance of the other set of opposing bridge resistors, e.g., resistors 38 and 42. The resistance values of bridge resistors 39 and 41 increase by the same amount that the resistance values of bridge resistors 38 and 42 decrease. Thus, the voltage signals across bridge resistors 39 and 41 increase by the same amount that the voltage signals across bridge resistors 38 and 42 decrease, i.e., a differential output signal is generated between output node 43 and output node 44. By way of example, bridge resistors 38, 39, 41, and 42 are fabricated to have resistance values of 1,000 ohms in the absence of the physical condition. In the presence of the physical condition, bridge resistors 39 and 41 may increase to approximately 1,002 ohms, while bridge resistors 38 and 42 decrease to approximately 998 ohms, i.e., piezo-resistive bridge 21 becomes unbalanced. The unbalance creates a differential signal between output nodes 43 and 44. It should be noted that the signals appearing at nodes 43 and 44 are also referred to as $S^+$ and $S^-$, respectively.

Output nodes 43 and 44 are coupled to amplifier 23 via interconnects 28 and 27, respectively. In accordance with the first embodiment, amplifier 23 includes three cascaded amplifier stages. The first amplifier stage comprises an operational amplifier 46 having differential input nodes 47 and 48, and a single-ended output node 49. More particularly, input node 47 is an inverting input node and input node 48 is a noninverting input node. Output node 44 of transducer 21 is coupled to noninverting input node 48 via interconnect 27. Input node 47 is coupled to output node 49 of operational amplifier 46 via a feedback resistor 52. In addition, input node 47 is coupled to D/A converter 33 via a resistor 53. As those skilled in the art are aware, feedback resistor 52 forms a negative feedback loop around operational amplifier 46, thereby forming, along with resistor 53, a noninverting operational amplifier configuration for an output signal from output node 44 of transducer 21. Operational amplifiers coupled in inverting and noninverting configurations are well known to those skilled in the art.

The second amplifier stage comprises an operational amplifier 56 having differential input nodes 57 and 58, and a single-ended output node 59, wherein input node 57 is an inverting input node and input node 58 is a noninverting input node. Output node 43 of transducer 21 is coupled to noninverting input node 58 via interconnect 28. Inverting input node 57 is coupled to output node 59 of operational amplifier 56 via a feedback resistor 62. In addition, inverting input node 57 is coupled to output node 49 of operational amplifier 46 via a resistor 63. Analogous to operational amplifier 46 having feedback resistor 52, feedback resistor 62 forms a negative feedback loop around operational amplifier 56, thereby forming, along with resistor 63, a noninverting operational amplifier configuration for an output signal from output node 43 of transducer 21.

The third amplifier stage comprises an operational amplifier 66 having differential input nodes 67 and 68, and a single-ended output node 69, wherein input node 67 is an inverting input node and input node 68 is a noninverting input node. Output node 59 of operational amplifier 56 is connected to noninverting input node 68 of operational amplifier 66. Inverting input node 67 is coupled to output node 69 of operational amplifier 66 via a series connected resistor network comprising resistors 71 and 72. More particularly, a first terminal of resistor 71 is connected to output node 69 and a second terminal of resistor 71 is connected to a first terminal of resistor 72. The connection of the first and second terminals of resistors 72 and 71, respectively, forms a node 74. Node 74 is coupled to port C of MPU 22 via programmable resistor array 34. MPU 22 and its I/O ports, e.g., port C, will be further described presently. The second terminal of resistor 72 is connected to inverting input node 67. In addition, inverting input node 67 is coupled to a reference potential, $V_{REF1}$, by a resistor 73. By way of example, reference potential $V_{REF1}$ is a ground potential. It should be understood that setting $V_{REF1}$ at a ground potential is not a limitation of the present invention and that $V_{REF1}$ can be set at a potential other than a ground potential. Analogous to operational amplifier 46 having a feedback resistor 52, feedback resistors 71 and 72 form a negative feedback loop around operational amplifier 66, thereby forming, along with resistor 73, a noninverting operational amplifier configuration for an input signal at input node 68. It should be noted that output node 69 of the third amplifier stage, i.e., operational amplifier 66, serves as the output node of amplifier 23. After an equilibration period, an output signal appearing at output node 69 serves as the compensated transducer analog output signal $S_{CA}$. In addition, output node 69 is coupled to an input port PD0 of MPU 22 by an interconnect 29. Thus, amplifier 23 serves as signal conditioning circuitry for sensor circuit 20. Suitable amplifiers for operational amplifiers 46, 56, and 66 include amplifiers manufactured by Motorola, Inc. having part numbers MC33274D, LM324D, MC33204D, and the like. It should be noted that MPU 22 will be described in further detail presently.

In addition, sensor circuit 20 includes a resistor 77 coupled in series to temperature sensing circuit 24, wherein a first terminal of resistor 77 is connected to power supply conductor 36 and a second terminal of resistor 77 is connected to a first terminal of temperature sensing circuit 24. A second terminal of temperature sensing circuit 24 is connected to power supply conductor 37. In addition, the first terminal of temperature sensing circuit 24 is coupled to an input port PD1 of MPU 22 via interconnect 32 and provides a temperature sense voltage signal, $V_{TEMP}$, to MPU 22.

Temperature sensing circuit 24 may be a single diode, a series-connected string of diodes, a thermistor, a band-gap reference circuit, and the like. In one embodiment, temperature sensing circuit 24 is a series-connected string of four diodes. Since the temperature coefficient of a forward biased diode is approximately -2.26 millivolts (mV) per °C, the string of four series-connected diodes has a temperature coefficient of approximately -9 mV per °C. In other words, for each degree Celsius that diode string 24 increases, the voltage signal $V_{TEMP}$ decreases by approximately 9 mV. Therefore, the voltage signal $V_{TEMP}$ serves as a temperature sense signal which is input into MPU 22. An important feature of the present invention is that temperature sensing circuit 24 is monolithically integrated with bridge network 21, i.e., transducer 21, thereby providing a precise measure of the silicon die temperature in response to ambient temperature variations.

In accordance with the first embodiment of the present invention, MPU 22 is a microprocessor manufactured by Motorola, Inc. having part number MC68HC705B5FN. The MC68HC705B5FN microprocessor includes three eight-bit input/output (I/O) data ports. One of the three eight-bit I/O data ports is referred to as port A, the second eight-bit I/O data port is referred to as port B, and the third eight-bit I/O data port is referred to as port C. As those skilled in the art are aware, port A is comprised of the eight one-bit I/O ports PA7-PA0, port B is comprised of the eight one-bit I/O ports PB7-PB0, and port C is comprised of the eight one-bit I/O ports PC7-PC0. In addition, MPU 22 has an eight-bit port, port D, capable of receiving analog electrical input signals and converting them to digital signals. In addition, port D is comprised of the eight one-bit input ports PD7-PD0. Further, MPU 22 includes memory locations and address, data, and instruction registers which are well known to those skilled in the art but not shown in the figures. The operation of MPU 22 will be described in further detail presently.

By way of example, output node 69 is coupled to the one-bit input port PD0 by interconnect 29 and temperature sensing circuit 24 is coupled to the one-bit input port PD1 by interconnect 32. It should be understood that the particular one-bit ports of port D to which output node 69 and temperature sensing circuit 24 are coupled are not limitations of the present invention. For example, output node 69 may be coupled to the one-bit input port PD7 and temperature sensing circuit 24 may be coupled to the one-bit input port PD5.

Eight-bit I/O data port A is coupled to resistor 53 of amplifier 23 via transducer offset compensation network 33. By way of example, transducer offset compensation network 33 is a D/A converter comprising a resistor network that converts an eight-bit digital output signal into an analog signal, i.e., D/A converter 33 is an eight-bit D/A converter. The resistor network includes resistors $R_2$, $R_4$, $R_6$, $R_8$, $R_{10}$, $R_{12}$, and $R_{14}$ each having first and second terminals, wherein the resistors are connected in series. In other words, the second terminal of resistor $R_2$ is connected to the first terminal of resistor $R_4$; the second terminal of resistor $R_4$ is connected to the first terminal of resistor $R_6$; the second terminal of resistor $R_6$ is con-

nected to the first terminal of resistor $R_8$; the second terminal of resistor $R_8$ is connected to the first terminal of resistor $R_{10}$; the second terminal of resistor $R_{10}$ is connected to the first terminal of resistor $R_{12}$; and the second terminal of resistor $R_{12}$ is connected to the first terminal of resistor $R_{14}$. In addition, port PA0 is coupled to the first terminal of resistor $R_2$ via resistor $R_1$; port PA1 is coupled to the second terminal of resistor $R_2$ and the first terminal of resistor $R_4$ via resistor $R_3$; port PA2 is coupled to the second terminal of resistor $R_4$ and the first terminal of resistor $R_6$ via resistor $R_5$; port PA3 is coupled to the second terminal of resistor $R_6$ and the first terminal of resistor $R_8$ via resistor $R_7$; port PA4 is coupled to the second terminal of resistor $R_8$ and the first terminal of resistor $R_{10}$ via resistor $R_9$; port PA5 is coupled to the second terminal of resistor $R_{10}$ and the first terminal of resistor $R_{12}$ via resistor $R_{11}$; port PA6 is coupled to the second terminal of resistor $R_{12}$ and the first terminal of resistor $R_{14}$ via resistor $R_{13}$; and port PA7 is coupled to the second terminal of resistor $R_{14}$ via resistor $R_{15}$. Furthermore, the first terminal of resistor $R_2$ is coupled to power supply conductor 37 via resistor $R_{16}$ and the second terminal of resistor $R_{14}$ is coupled to power supply conductor 37 via resistor $R_{17}$. The second terminal of resistor $R_{14}$ is connected to resistor 53, thereby coupling MPU 22 to amplifier 23. Preferably, the resistance values for the resistors $R_2$, $R_4$, $R_6$, $R_8$, $R_{10}$, $R_{12}$, $R_{14}$, and $R_{17}$, are selected to be of equal value and the resistance values of resistors $R_1$, $R_3$, $R_5$, $R_7$, $R_9$, $R_{11}$, $R_{13}$, $R_{15}$, and $R_{16}$ are selected to be of equal value. More particularly, the resistance values of resistors $R_2$, $R_4$, $R_6$, $R_8$, $R_{10}$, $R_{12}$, $R_{14}$, and $R_{17}$ are selected to be one-half the resistance values of resistors $R_1$, $R_3$, $R_5$, $R_7$, $R_9$, $R_{11}$, $R_{13}$, $R_{15}$, and $R_{16}$. By way of example, resistors $R_2$, $R_4$, $R_6$, $R_8$, $R_{10}$, $R_{12}$, $R_{14}$, and $R_{17}$ have a resistance value of 2,210 ohms and resistors $R_1$, $R_3$, $R_5$, $R_7$, $R_9$, $R_{11}$, $R_{13}$, $R_{15}$, and $R_{16}$ have a resistance value of 4,420 ohms.

It should be understood that the type of D/A converter is not a limitation of the present invention and that other suitable D/A converter implementations include: a 1-bit pulse width modulated (PWM) D/A converter, a monolithic integrated circuit D/A converter, a ratio-resistor ladder D/A converter, or the like.

Further, port C is an eight-bit I/O port through which the span compensation signal is transmitted. Port C is coupled to node 74 via a programmable resistor array 34. By way of example, programmable resistor array 34 comprises a resistor network that enables an eight-bit digital output signal to select the resistance appearing at node 74. The digital selection of the resistance value appearing at node 74 selectively loads the feedback loop of the third amplifier stage 66 thereby changing the gain of the third amplifier stage. More particularly, programmable resistor array 34 comprises eight resistors $R_{27}$, $R_{26}$, $R_{25}$, $R_{24}$, $R_{23}$, $R_{22}$, $R_{21}$, and $R_{20}$, wherein each resistor has first and second terminals. The first terminals of each resistor of the programmable resistor array 34 are connected together and connected to node 74. The second terminal of resistor $R_{27}$ is connected to I/O port PC7; the second terminal of resistor $R_{26}$ is connected to I/O port PC6; the second terminal of resistor $R_{25}$ is connected to I/O port PC5; the second terminal of resistor $R_{24}$ is connected to I/O port PC4; the second terminal of resistor $R_{23}$ is connected to I/O port PC3; the second terminal of resistor $R_{22}$ is connected to I/O port PC2; the second terminal of resistor $R_{21}$ is connected to I/O port PC1; and the second terminal of resistor $R_{20}$ is connected to I/O port PC0 of MPU 22.

By way of example, resistor $R_{27}$ has a resistance value of 5,000 ohms ($\Omega$) and the resistance values of resistors $R_{26}$-$R_{20}$ are selected such that:

$$R_{26} = 2 * R_{27};$$
$$R_{25} = 4 * R_{27};$$
$$R_{24} = 8 * R_{27};$$
$$R_{23} = 16 * R_{27};$$
$$R_{22} = 32 * R_{27};$$
$$R_{21} = 64 * R_{27}; \text{ and,}$$
$$R_{20} = 128 * R_{27}.$$

Those skilled in the art will recognize that PRA 34 is configured as a binary resistor array.

In accordance with the first embodiment of the present invention, a null input pressure and a nominal temperature, $T_{NOM}$, such as, for example, room temperature, are applied to transducer 21, and it is calibrated for offset. While still at the nominal temperature, a full-scale pressure is applied to transducer 21 and it is calibrated for span. Then, the null input pressure is applied to transducer 21 and the temperature is changed by an amount $\Delta T$ to determine an offset temperature compensation coefficient. While still at the temperature changed by an amount $\Delta T$ ($T_{NOM} + \Delta T$), the full-scale pressure is applied to determine a span temperature compensation coefficient.

To calibrate offset, MPU 22 is programmed to maintain a desired offset voltage at output node 69 when a null input pressure is applied to sensor circuit 20. For a sensor operating from a five volt power supply, a typical desired offset voltage is 0.5 volts. Accordingly, a digital signal representative of the desired offset voltage is stored in a first memory location (not shown) which is present in MPU 22. Further, when transducer 21 is maintained at the nominal temperature and the null input pressure is applied to transducer 21, MPU 22 receives analog electrical input signals at ports PD0 and PD1. At port PD0, MPU 22 receives an analog output voltage signal $S_{CA}$ from output node 69, converts analog output voltage signal $S_{CA}$ into a digital output signal $S_{CD}$ and stores the digital output signal $S_{CD}$ in a second memory location (not shown) which is present in MPU 22. The second memory location may be, for example, I/O port B. Likewise, at input port PD1, MPU 22 receives an analog temperature sense voltage signal from temperature sensing circuit 24, converts it into a digital temperature sense voltage signal, and stores the digital temperature sense voltage signal in a third memory location (not shown) which is present in MPU 22.

MPU 22 compares the digital output signal stored in the second memory location with the digital signal stored in the first memory location and generates a digital signal in accordance with the difference between the digital signals stored in the first and second memory locations, i.e., MPU 22 generates a digital offset error signal. In accordance with the digital offset error signal, MPU 22 adjusts the digital signal appearing at port A. It should be understood that port A, being an eight-bit I/O data port, can have digital values ranging from 00 to FF in hexadecimal notation. Thus, MPU 22 adjusts the digital signal appearing at I/O port A by incrementing or decrementing a count or digital signal appearing at I/O port A. For example, the digital signal appearing at I/O port A having a value of "5A" (in hexadecimal notation), results in an analog output signal $S_{CA}$ of 480 millivolts (mV) appearing at output node 69 . In order to adjust the analog output signal $S_{CA}$ appearing at output node 69 to 500 mV (0.5 volts), MPU 22 changes the count appearing at I/O port A to, for example, "5B" (in hexadecimal notation). The new count, i.e., the adjusted digital signal, appearing at port A is applied to an input of transducer compensation network 33 and is converted to an adjusted analog voltage signal which appears at an output of transducer compensation network 33. The adjusted analog voltage signal changes the voltage appearing at output node 69 to the value of the desired offset voltage, i.e., 500 mV. The value of the digital signal at I/O port A that produces the desired output voltage at output node 69 is stored in a fourth memory location (not shown) which is present in MPU 22. Thus, the value of the digital signal at I/O port A which yields a desired output voltage is stored in the fourth memory location (not shown) and the nominal temperature at which the desired output voltage occurs is stored in the third memory location (not shown). In other words, two values for calibrating and temperature compensating the offset are stored in memory locations in MPU 22.

Next, span calibration is performed by applying an input pressure to transducer 21 at the nominal temperature, wherein the applied input pressure produces a full-scale output of transducer 21. More particularly, MPU 22 is programmed to maintain the desired full-scale voltage at output node 69 when the maximum operating pressure and the nominal temperature are applied. A typical desired offset voltage is 0.5 volts and a typical full-scale voltage is 4.5 volts. Therefore, a typical span is 4.0 volts. A digital signal representative of the desired full-scale voltage is stored in a fifth memory location (not shown) which is present in MPU 22. MPU 22 receives analog electrical input signals at ports PD0 and PD1 when transducer 21 is maintained at the nominal temperature and the full-scale input pressure is applied to sensor circuit 20. At port PD0, MPU 22 receives analog output voltage signal $S_{CA}$ from output node 69, converts the analog output voltage signal into a digital output signal, and stores the digital output signal in a sixth memory location (not shown) which is present in MPU 22.

MPU 22 compares the digital output signal stored in the sixth memory location with the digital signal stored in the fifth memory location and generates a digital signal in accordance with the difference between the digital signals stored in the fifth and sixth memory locations, i.e., MPU 22 generates a digital span error signal. In accordance with the digital span error signal, MPU 22 adjusts the digital signal appearing at I/O port C. It should be understood that similar to I/O port A, I/O port C is an eight-bit I/O data port that can have digital values ranging from 00 to FF in hexadecimal notation. Thus, MPU 22 adjusts the digital signal appearing at I/O port C by incrementing or decrementing a count or digital signal appearing at I/O port C. For example, the digital signal appearing at I/O port C having a value of "7A" (in hexadecimal notation) results in an analog output signal $S_{CA}$ of 4.4 volts appearing at output node 69. In order to adjust the analog output signal, $S_{CA}$, appearing at output node 69 to 4.5 volts, MPU 22 changes the count appearing at I/O port C to, for example, "7B" (in hexadecimal notation). The new count, i.e., the adjusted digital signal, appearing at port C is applied to an input of transducer span compensation network 34 and is converted to an adjusted effective resistance which appears at an output of transducer span compensation network 34. The adjusted effective resistance changes the voltage appearing at output node 69 to the value of the desired full-scale voltage, i.e., 4.5 volts. The value of the digital signal at I/O port C that produces the desired output voltage at output node 69 is stored in a seventh memory location (not shown) present in MPU 22. Thus, the value of the digital signal at I/O port C which yields a desired output voltage is stored in the seventh memory location (not shown). It should be noted that the nominal temperature at which the desired output voltage occurs was stored in the third memory location (not shown) during the offset calibration step. Thus, two values for calibrating and temperature compensating the span are stored in memory locations present in MPU 22.

In accordance with the present invention, an offset temperature compensation coefficient is determined by changing the temperature of sensor circuit 20 by an amount $\Delta T$ and applying a null input to transducer 21. MPU 22 receives analog electrical input signals at ports PD0 and PD1. At port PD0, MPU 22 receives an analog output voltage signal, $S_{CA}$, from output node 69, converts analog output voltage signal, $S_{CA}$, into a digital output signal, $S_{CD}$, and stores the digital output signal, $S_{CD}$, in an eighth memory location (not shown) which is present in MPU 22. Likewise, at input port PD1, MPU 22 receives an analog temperature sense voltage signal from temperature sensing circuit 24, converts it into a digital temperature sense voltage signal, and stores the digital temperature sense voltage signal in a ninth memory location (not shown) which is present in MPU 22.

MPU 22 compares the digital output signal stored in the eighth memory location with the digital signal stored in the first memory location and generates a digital signal in accordance with the difference between the digital signals stored in the first and eighth memory locations, i.e., MPU 22 generates a digital temperature offset error signal. In accordance with the digital temperature offset error signal, MPU 22 adjusts the digital signal appearing at port A. It should be remembered that eight-bit I/O port A can have digital values ranging from 00 to FF in hexadecimal notation. Thus, MPU 22 adjusts the digital signal appearing at I/O port A by incrementing or decrementing a count or digital signal appearing at I/O port A. For example, the digital signal appearing at I/O port A having a value of "7A" (in hexadecimal notation) results in an analog output signal, $S_{CA}$, of 496 millivolts (mV) appearing at output node 69. In order to adjust the analog output signal, $S_{CA}$, appearing at output node 69 to 500 mV (0.5 volts), MPU 22 changes the count appearing at I/O port A to, for example, "7C" (in hexadecimal notation). The new count, i.e., the adjusted digital signal, appearing at port A is applied to an input node of transducer offset compensation network 33 and is converted to an adjusted analog voltage signal which appears at an output node of transducer offset compensation network 33. The adjusted analog voltage signal changes the voltage appearing at output node 69 to the value of the desired offset voltage, i.e., 500 mV. The value of the digital signal at I/O port A that produces the desired output voltage at output node 69 is stored in a tenth memory location (not shown) present in MPU 22. Thus, the value of the digital signal at I/O port A which yields a desired output voltage at the temperature $T_{NOM} + \Delta T$ is stored in the tenth memory location (not shown) and the temperature, $T_{NOM} + \Delta T$, at which the desired output voltage occurs is stored in the ninth memory location (not shown). In other words, two additional values for temperature compensating the offset are stored in memory locations in MPU 22.

Next, span temperature compensation is performed by applying an input pressure to transducer 21 which is at the temperature $T_{NOM} + \Delta T$, wherein the applied input pressure produces a full-scale output signal of transducer 21. It should be remembered that a digital signal representative of the desired full-scale voltage is stored in a fifth memory location (not shown). MPU 22 receives analog electrical input signals at ports PD0 and PD1 when transducer 21 is maintained at the temperature $T_{NOM} + \Delta T$ and the full-scale input pressure is applied to sensor circuit 20. At port PD0, MPU 22 receives analog output voltage signal, $S_{CA}$, from output node 69, converts the analog output voltage signal into a digital output signal, and stores the digital output signal in an eleventh memory location (not shown) present in MPU 22.

MPU 22 compares the digital output signal stored in the eleventh memory location with the digital signal stored in the fifth memory location and generates a digital signal in accordance with the difference between the digital signals stored in the fifth and eleventh memory locations, i.e., MPU 22 generates a digital span error signal. In accordance with the digital span error signal, MPU 22 adjusts the digital signal appearing at I/O port C. It should be understood that similar to I/O port A, I/O port C is an eight-bit I/O data port that can have digital values ranging from "00" to "FF" in hexadecimal notation. Thus, MPU 22 adjusts the digital signal appearing at I/O port C by incrementing or decrementing the count or digital signal appearing at I/O port C. For example, the digital signal appearing at I/O port C having a value of "8A" (in hexadecimal notation), results in analog output signal, $S_{CA}$, of 4.2 volts appearing at output node 69. In order to adjust the analog output signal, $S_{CA}$, appearing at output node 69 to 4.5 volts, MPU 22 changes the count appearing at I/O port C to, for example, "8C" in hexadecimal notation. The new count, i.e., the adjusted digital signal, appearing at I/O port C is applied to an input of transducer compensation network 34 and is converted into an adjusted effective resistance which appears at an output node of transducer span compensation network 34. The adjusted effective resistance changes the voltage appearing at output node 69 to the value of the desired full-scale voltage, i.e., 4.5 volts. The value of the digital signal at I/O port C that produces the desired output voltage at output node 69 is stored in a twelfth memory location (not shown) present in MPU 22. Thus, the value of the digital signal at I/O port C which yields the desired output voltage is stored in the twelfth memory location. It should be noted that the temperature $T_{NOM} + \Delta T$ at which the desired output voltage occurs was stored in the ninth memory location (not shown) during the offset compensation step. Thus, an additional two values for temperature compensating the span are stored in memory locations in MPU 22.

It is well known that offset and span variation due to temperature changes for a pressure transducer like transducer 21 are linear or can be approximated as linear with changes in temperature. Accordingly, the information stored in the third, fourth, seventh, ninth, tenth, and twelfth memory locations may be used to develop a linear model of the temperature changes in offset and span of a sensor. Let it be known, however, that a linear or approximately linear relationship between the span and offset versus temperature changes is not a limitation to the present invention.

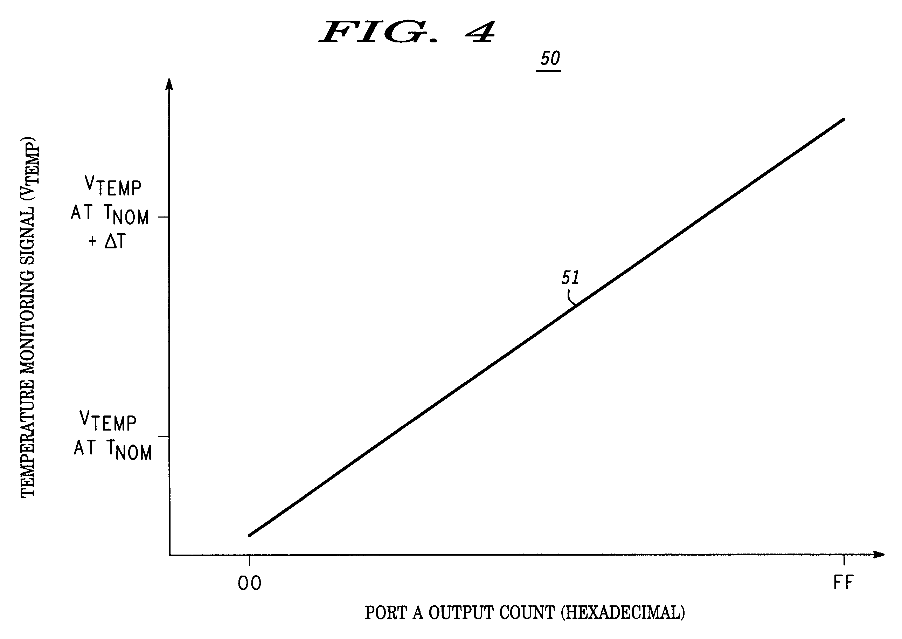

FIG. 4 illustrates an offset temperature compensation curve 50 that represents the relationship between the temperature of sensor circuit 20 and the count appearing on I/O port A to provide the desired voltage at output node 69, i.e., curve 50 illustrates an offset temperature compensation relationship. By way of example, at the temperature $T_{NOM}$ (stored in the third memory location), a count of "5B" (hexadecimal notation) at port A produces an output voltage of 0.5 volts at output node 69. Moreover, at the temperature $T_{NOM} + \Delta T$ (stored in the ninth memory location), a count of "7C" (in hexadecimal notation) at the output of port A produces the desired voltage of 0.5 volts at output node 69. MPU 22 is programmed to determine the slope of a line 51 intersecting the point of the temperature $T_{NOM}$ and its corresponding offset count (stored in the fourth memory location) and the point of the temperature $T_{NOM} + \Delta T$ and its corresponding offset count (stored in the tenth memory location).

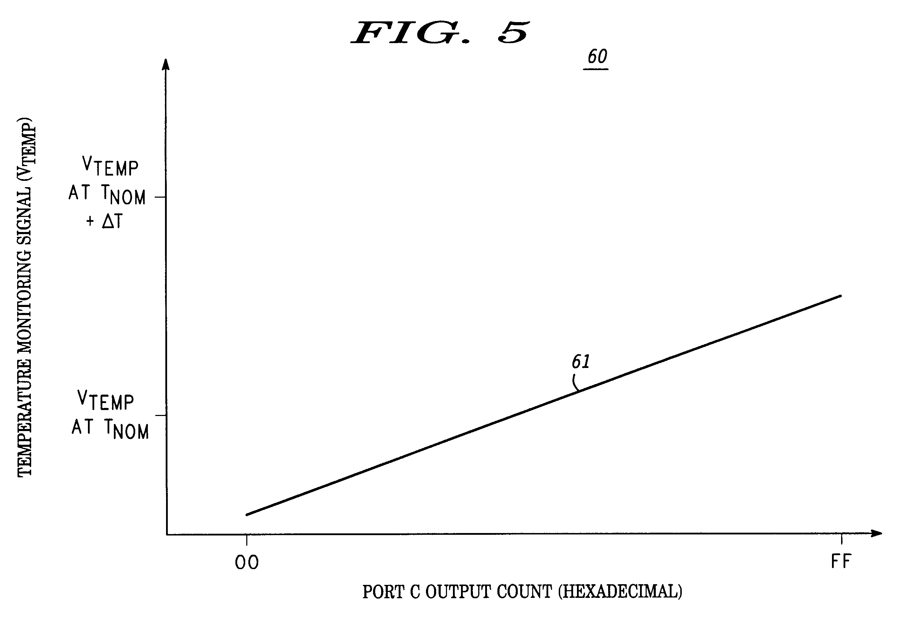

Likewise, FIG. 5 illustrates a span temperature compensation curve 60 which graphically shows the relationship between the temperature of sensor circuit 20 and the count appearing on I/O port C to provide the desired voltage at output node 69, i.e., curve 60 illustrates a span temperature compensation relationship. MPU 22 determines the slope of line 61 intersecting the point of the temperature $T_{NOM}$ and its corresponding span count (stored in the seventh memory location) appearing on I/O port C and the point of the temperature $T_{NOM} + \Delta T$ and its corresponding span count (stored in the twelfth memory location). The linear relationships are used to determine the counts needed at I/O ports A and C for a particular temperature, $T_R$ to produce the desired voltage at output node 69. Thus, MPU 22 receives a temperature signal at port PD1 and uses the slope of line 51 to determine the count that should be at I/O port A to produce the desired offset voltage of, for example, 0.5 volts. Similarly, MPU 22 uses the slope of line 61 to determine the count that should appear at I/O port C to produce the desired span. MPU 22 then applies these counts to temperature compensate sensor circuit 20. Thus, in the first embodiment a transducer compensation signal is generated, wherein the transducer compensation signal includes offset calibration and temperature compensation components and span calibration and temperature compensation components. Accordingly, the sensor circuit 20 generates an output signal that is calibrated and temperature compensated for offset and span. Although sensor circuit 20 is shown as having offset and span temperature coefficients of particular polarities, it should be understood that the temperature characteristics of sensor 20 are not a limitation of the present invention and that sensor circuit 20 can have either positive or negative temperature coefficients.

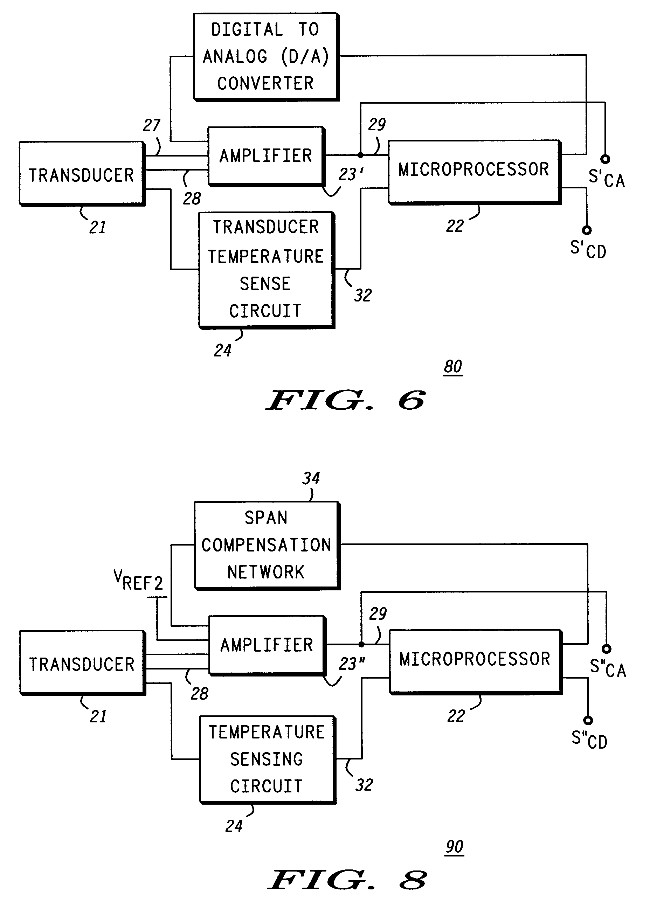

FIG. 6 illustrates a schematic block diagram of a sensor circuit 80 for use in providing offset compensation as well as level shifting in accordance with the second embodiment of the present invention. It should be understood that sensor circuit 80 is suitable for manufacture as an integrated circuit using conventional integrated circuit processing techniques. It should be further understood that the reference numerals of like elements illustrated in FIGs. 1-5 have been retained in FIG. 6. Accordingly and by way of example, sensor circuit 80 is a pressure sensor comprising a transducer 21 coupled to MPU 22 via amplifier 23'. In particular, a first output port of transducer 21 is coupled to a first input port of amplifier 23' via an interconnect 27 and a second output port of transducer 21 is coupled to a second input port of amplifier 23' via interconnect 28. Amplifier 23' converts a differential input signal from transducer 21 into a single-ended output signal, which appears on an output port of amplifier 23'. The output port of amplifier 23' is coupled to a first input port of MPU 22 via interconnect 29. It should be noted that amplifier 23' is similar to amplifier 23 except that amplifier 23' only has two amplifier stages. Thus, amplifier 23' has been distinguished from amplifier 23 by appending a prime symbol (') to reference numeral 23.

In addition, transducer 21 is coupled to MPU 22 via a temperature sensing circuit 24. By way of example, transducer 21 and temperature sensing circuit 24 are monolithically integrated into a single silicon substrate. An output port of temperature sensing circuit 24 is coupled to a second input port of MPU 22 via interconnect 32.

In accordance with the second embodiment of the present invention, a closed-loop feedback network is formed by coupling a first output port of MPU 22 to a third input port of amplifier 23' via an offset compensation network 33. By way of example, offset compensation network 33 is a D/A converter. Thus, a level shifted, offset compensated, analog output signal $S_{CA}'$ appears at the output port of amplifier 23' in response to the physical condition. In addition, a level shifted, offset compensated, digital output signal $S_{CD}'$ appears at an output port of MPU 22. It should be noted that output signals $S_{CA}'$ and $S_{CD}'$ have been distinguished from output signals $S_{CA}$ and $S_{CD}$, respectfully, by the addition of a prime symbol (') because they do not include span calibration or span temperature compensation components.

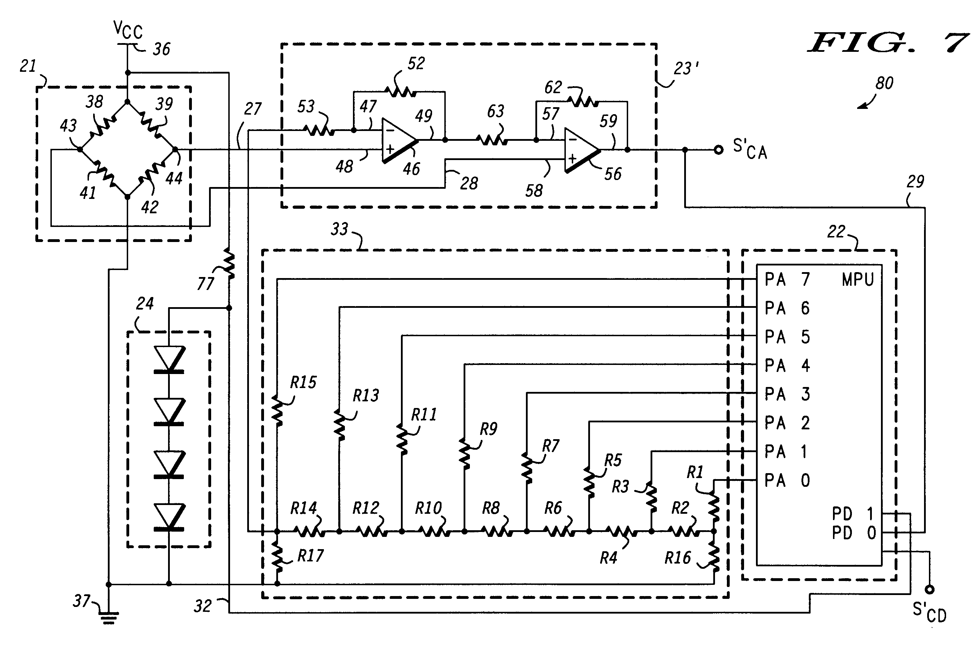

FIG. 7 illustrates a detailed schematic diagram of an embodiment of sensor circuit 80 shown in FIG. 6. To indicate transducer 21, temperature sensing circuit 24, MPU 22, amplifier 23', and offset compensation network 33, each element is shown in FIG. 7 as being enclosed within its own rectangular structure, wherein the boundaries of each rectangular structure are indicated by broken lines. It should be noted that transducer 21, MPU 22, temperature sensing circuit 24, and offset compensation feedback network 33, e.g., a D/A converter, and their operation have been described with reference to FIG. 3, thus the description of these portions of sensor circuit 80 has not been repeated.

Output nodes 43 and 44 are coupled to amplifier 23' via interconnects 28 and 27, respectively. In accordance with the second embodiment of the present invention, amplifier 23' includes two cascaded amplifier stages. The first amplifier stage comprises an operational amplifier 46 having differential input nodes 47 and 48, and a single-ended output node 49. More particularly, input node 47 is an inverting input node and input node 48 is a noninverting input node. Output node 44 of transducer 21 is coupled to noninverting input node 48 via interconnect 27. Input node 47 is coupled to output node 49 of operational amplifier 46 via a feedback resistor 52. In addition, input node 47 is coupled to D/A converter 33 via a resistor 53. Operational amplifier 46 is in a noninverting configuration.

The second amplifier stage comprises an operational amplifier 56 having differential input nodes 57 and 58, and a single-ended output node 59, wherein input node 57 is an inverting input node and input node 58 is a noninverting input node. Output node 43 of transducer 21 is coupled to noninverting input node 58 via interconnect 28. Inverting input node 57 is coupled to output node 59 of operational amplifier 56 via a feedback resistor 62. In addition, inverting input node 57 is coupled to output node 49 of operational amplifier 46 via a resistor 63. Analogous to operational amplifier 46 having feedback resistor 52, feedback resistor 62 forms a negative feedback loop around operational amplifier 56, thereby forming, along with resistor 63, a noninverting operational amplifier configuration for an output signal from output node 43 of transducer 21.

In addition, transducer 21 is coupled to MPU 22 via a temperature sensing circuit 24. An output port of temperature sensing circuit 24 is coupled to a second input port of MPU 22, e.g., port PD1, via interconnect 32.

It should be noted that output node 59 of the second amplifier stage, i.e., operational amplifier 56 serves as the output node of amplifier 23'. After an equilibration period, an output signal appearing at output node 59 serves as the level shifted, offset compensated, analog output signal $S_{CA}'$. In addition, output node 59 is coupled to an input port PD0 of MPU 22 by an interconnect 29. MPU 22 converts the level shifted, offset compensated, analog output signal $S_{CA}'$ to a level shifted, offset compensated, digital output signal $S_{CD}'$ which appears at an I/O port of MPU 22.

The operation of sensor circuit 80 is similar to the operation of sensor circuit 20 with the difference being that sensor circuit 80 is missing a span calibration and temperature compensation component. Thus, the description of the operation of sensor circuit 20 with reference to FIG. 3 applies to the operation of sensor circuit 80 with the exception of the span calibration and temperature compensation components.

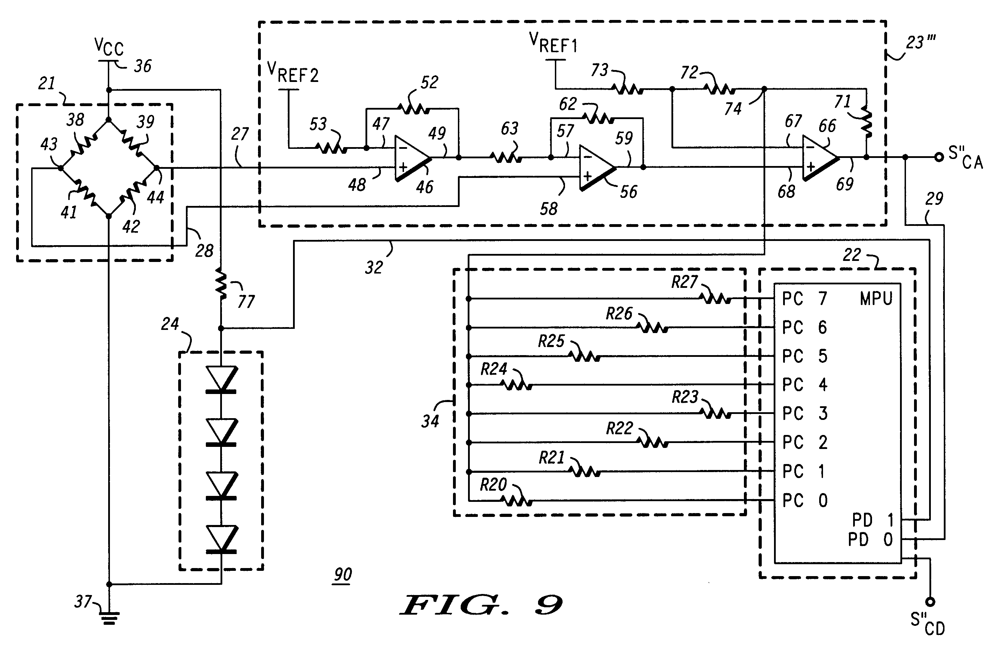

FIG. 8 illustrates a schematic block diagram of a sensor circuit 90 for use in providing span compensation in accordance with the third embodiment of the present invention. It should be understood that sensor circuit 90 is suitable for manufacture as an integrated circuit using conventional integrated circuit processing techniques. It should be further understood that the reference numerals of like elements illustrated in FIGs. 1-7 have been retained in FIG. 8. By way of example, sensor circuit 90 is a pressure sensor comprising a transducer 21 coupled to MPU 22 via an amplifier 23". In particular, a first output port of transducer 21 is coupled to a first input port of amplifier 23" via an interconnect 27 and a second output port of transducer 21 is coupled to a second input port of amplifier 23" via an interconnect 28. Further, a third input port of amplifier 23" is coupled to a reference potential $V_{REF2}$. By way of example, reference potential $V_{REF2}$ is ground potential. It should be noted that amplifier 23" is similar to amplifier 23 except that the third input port is coupled to reference potential $V_{REF2}$. It should be understood that setting $V_{REF2}$ at a ground potential is not a limitation of the present invention and that $V_{REF2}$ may be set at a potential other than a ground potential. Thus, amplifier 23" has been distinguished from amplifier 23 by appending two prime symbols to reference numeral 23. Amplifier 23" converts a differential input signal from transducer 21 into a single-ended output signal, which appears on an output port of amplifier 23". The output port of amplifier 23" is coupled to a first input port of MPU 22, e.g., port PD0 of FIG. 9, via an interconnect 29.

In addition, transducer 21 is coupled to MPU 22 via a temperature sensing circuit 24. An output port of temperature sensing circuit 24 is coupled to a second input port of MPU 22, e.g., port PD1 of FIG. 9, via interconnect 32.

In accordance with the third embodiment of the present invention, a closed-loop span compensation network is formed by coupling an output port of MPU 22 to a fourth input port of amplifier 23". By way of example, the output port of MPU 22 is coupled to the fourth input port of amplifier 23" via a programmable resistor array 34. Thus, a span compensated output signal $S_{CA}"$ appears at the output port of amplifier 23" in response to a physical condition. Further, MPU 22 converts the level shifted, span compensated, analog output signal $S_{CA}"$ to a level shifted, span compensated, digital output signal $S_{CD}"$ which appears at an I/O port of MPU 22.

FIG. 9 illustrates a detailed schematic diagram of an embodiment of sensor circuit 90 shown in FIG. 8. It should be understood that the same reference numerals are used in the figures to denote the same elements. To indicate transducer 21, temperature sensing circuit 24, MPU 22, amplifier 23", and span compensation network 34 of sensor circuit 90, each element is shown in FIG. 9 as being enclosed within its own rectangular structure, wherein the boundaries of each rectangular structure are indicated by broken lines. It should be noted that transducer 21, MPU 22, temperature sensing circuit 24, and span compensation feedback network 34, e.g., a programmable resistor array, and their operation have been described with reference to FIG. 3, thus the description of these portions of sensor circuit 90 has not been repeated.

Output nodes 43 and 44 are coupled to amplifier 23" via interconnects 28 and 27, respectively. In accordance with the third embodiment, amplifier 23" includes three cascaded amplifier stages. It should be noted that amplifier 23" is the same as amplifier 23 except that input node 47 is coupled to a reference potential $V_{REF2}$, rather than a D/A converter. Thus, only the first amplifier stage will be described in detail. A description of the second and third amplifier stages appears with the description of amplifier 23 of FIG. 3. The first amplifier stage comprises an operational amplifier 46 having differential input nodes 47 and 48, and a single-ended output node 49. More particularly, input node 47 is an inverting input node and input node 48 is a noninverting input node. Output node 44 of transducer 21 is coupled to noninverting input node 48 via interconnect 27. Input node 47 of operational amplifier 46 is coupled to output node 49 via a feedback resistor 52 and to reference potential $V_{REF2}$ via a resistor 53. As those skilled in the art are aware, feedback resistor 52 forms a negative feedback loop around operational amplifier 46, thereby forming, along with resistor 53, a noninverting operational amplifier configuration for an output signal from output node 44 of transducer 21.

It should be noted that output node 69 of the third amplifier stage, i.e., operational amplifier 66, serves as the output node of amplifier 23". After an equilibration period, an output signal appearing at output node 69 serves as the level shifted, span compensated, analog output signal $S_{CA}$". In addition, output node 69 is coupled to an input port PD0 of MPU 22 by an interconnect 29. Further, MPU 22 converts the level shifted, span compensated, analog output signal $S_{CA}$" to a level shifted, span compensated, digital output signal $S_{CD}$" which appears at an I/O port of MPU 22.

The operation of sensor circuit 90 is similar to the operation of sensor circuit 20 with the difference being that sensor circuit 90 is missing an offset calibration and temperature compensation component. Thus, the description of the operation of sensor circuit 20 with reference to FIG. 3 applies to the operation of sensor circuit 90 with the exception of offset calibration and temperature compensation components.

By now it should be appreciated that a sensor circuit and a method of calibrating and temperature compensating the offset and span of the sensor have been provided. In the first embodiment, the closed-loop compensation networks compensate the offset and span of the transducer output signal and provide level shifting of the transducer output signal. In the second embodiment, the closed-loop compensation network compensates the offset of the transducer output signal and provides level shifting of the transducer output signal. In the third embodiment, the closed-loop compensation network compensates the span of the transducer output signal. Thus, an advantage of the present invention is that the compensation and level shift signals adjust the transducer output signal to form a compensated transducer output signal that may be level shifted for compatibility with input voltage levels of succeeding circuit elements, e.g., microprocessors, memory storage elements, A/D (analog-to-digital) converters, logic circuitry, and the like.

Another advantage of the present invention is that the offset and span compensation are accomplished without using techniques such as laser trimming which cause irreversible changes to the sensor circuitry and must be performed before final packaging is completed. In other words, the compensated transducer output signal is re-programmable. Further, the compensation may be accomplished by the end-user rather than at the factory, thereby increasing the design options available to the end-user. Further advantages of the present invention are that the compensation can be performed quickly and as often as necessary and the compensation accuracy is defined and implemented by the end-user.

## Claims

1. A method for compensating a sensor circuit (20) having a transducer (21), comprising the steps of:
   using the transducer (21) to sense a physical condition;
   generating a transducer output signal (12) in response to the physical condition that is sensed;
   generating a transducer compensation signal (13); and
   generating a compensated transducer output signal (14) in response to the transducer output signal and the transducer compensation signal.

2. The method of claim 1, wherein the step (13) of generating a transducer compensation signal includes generating the transducer compensation signal to have offset calibration and temperature compensation components and span calibration and temperature compensation components.

3. The method of claim 1, wherein the step (13) of generating a transducer compensation signal includes generating the transducer compensation signal to have offset calibration and temperature compensation components.

4. The method of claim 1, wherein the step (13) of generating a transducer compensation signal includes generating the transducer compensation signal to have span calibration and temperature compensation components.

5. A method for compensating a transducer (21) of a sensor circuit (20), comprising the steps of:
   receiving an output signal from the transducer (21); and
   transforming the output signal from the transducer (21) into a compensated transducer output signal, wherein the output signal from the transducer (21) is transformed in response to a closed-loop transducer compensation signal.

6. The method of claim 5, wherein the step of transforming the output signal from the transducer (21) into a compensated transducer output signal comprises the steps of:
   storing a desired offset voltage in a microprocessor unit (22);
   applying a null input pressure to the transducer (21), the transducer (21) is operating at a first temperature;
   comparing a first transducer output signal with the desired offset voltage stored in the microprocessor unit (22) and generating a first offset compensation signal in accordance with a result of the comparison of the first transducer output signal with the desired offset voltage stored in the microprocessor unit (22);

storing the first offset compensation signal in the microprocessor unit (22); and

calibrating the transducer (21) for offset by changing the first transducer output signal in accordance with the first offset compensation signal.

7. The method of claim 6, further including the steps of:

storing a desired full-scale voltage in the microprocessor unit (22);

applying a full-scale pressure to the transducer (21);

comparing the first transducer output signal with the desired full-scale voltage stored in the microprocessor unit (22) and generating a first span compensation signal in accordance with the results of the comparison;

storing the first span compensation signal; and

calibrating the transducer (21) for span by changing the first transducer output signal in accordance with the first span compensation signal.

8. The method of claim 6, further including the steps of:

storing a first temperature monitoring signal in the microprocessor unit (22);

changing the temperature of the transducer (21) so that the transducer (21) is operating at a second temperature;

storing a second temperature monitoring signal in the microprocessor unit (22);

comparing a second transducer output signal with the desired offset voltage stored in the microprocessor unit (22) and generating a second offset compensation signal in accordance with a result of the comparison of the second transducer output signal with the desired offset voltage stored in the microprocessor unit (22);

storing the second offset compensation signal in the microprocessor unit (22); and

calibrating the transducer (21) for offset by changing the second transducer output signal in accordance with the second offset compensation signal.

9. The method of claim 8, further including the steps of:

storing a desired full-scale voltage in the microprocessor unit (22);

applying a full-scale pressure to the transducer (21);

comparing the second transducer output signal with the desired full-scale voltage stored in the microprocessor unit (22) and generating a second span compensation signal in accordance with result of the comparison of the second transducer output signal with the desired full-scale voltage stored in the microprocessor unit (22);

storing the second span compensation signal; and

calibrating the transducer (21) for span by changing the second transducer output signal in accordance with the second span compensation signal.

10. A sensor circuit (20), comprising:

a transducer (21) operating in response to a physical condition for providing a differential sensor signal at first (43) and second (44) transducer output ports;

an amplifier (23) having a plurality of input ports and at least one output port (69), wherein the first transducer output port (43) is coupled to a first amplifier input port (58) of the plurality of input ports and the second transducer output port (44) is coupled to a second amplifier input port (48) of the plurality of input ports;

a transformation circuit (22) having at least two input ports and at least one output port, wherein a first of the at least two input ports is coupled to the at least one output port (69) of the amplifier (23); and

at least one feedback network (33) having at least one input node and at least one output node, wherein the at least one input node is coupled to the at least one output port of the transformation circuit and the at least one output node of the at least one feedback network is coupled to a third amplifier input port (47) of the plurality of input ports.

11
SENSE A
PHYSICAL
CONDITION

12
GENERATE A
TRANSDUCER
OUTPUT
SIGNAL

13
GENERATE A
TRANSDUCER
COMPENSATION
SIGNAL

14
GENERATE A
COMPENSATED
TRANSDUCER
OUTPUT
SIGNAL

*FIG. 1*  $\underline{10}$

34
SPAN
COMPENSATION
NETWORK

33
OFFSET
COMPENSATION
NETWORK

21
TRANSDUCER

27

28

23
AMPLIFIER

29

MICROPROCESSOR

22

24
TEMPERATURE
SENSING
CIRCUIT

32

$S_{CA}$

$S_{CD}$

$\underline{20}$

*FIG. 2*

FIG. 3A

EP 0 721 099 A2

FIG. 3B

EP 0 721 099 A2

# *FIG. 4*

EP 0 721 099 A2

## FIG. 5

EP 0 721 099 A2

DIGITAL TO
ANALOG (D/A)
CONVERTER

TRANSDUCER

*27*

*28*

AMPLIFIER

*23'*

*29*

MICROPROCESSOR

S'CA

S'CD

*21*

TRANSDUCER
TEMPERATURE
SENSE
CIRCUIT

*32*

*24*

*22*

*80*

*FIG. 6*

*34*

SPAN
COMPENSATION
NETWORK

$V_{REF2}$

TRANSDUCER

*21*

*28*

AMPLIFIER

*23"*

*29*

MICROPROCESSOR

S"CA

S"CD

TEMPERATURE
SENSING
CIRCUIT

*32*

*24*

*22*

*90*

*FIG. 8*

18

FIG. 7

EP 0 721 099 A2

FIG. 9

EP 0 721 099 A2